Europäisches Patentamt

European Patent Office

Office européen des brevets

(19)

(11) Veröffentlichungsnummer: **0 253 216 B1**

(12) **EUROPÄISCHE PATENTSCHRIFT**

(45) Veröffentlichungstag der Patentschrift: **25.03.92**

(51) Int. Cl.⁵: **B29C 47/88,** //B29L23:00

(21) Anmeldenummer: **87109511.3**

(22) Anmeldetag: **02.07.87**

(54) **Vorrichtung für die Herstellung von Kunststoffolien.**

(30) Priorität: **12.07.86 DE 3623548**

(43) Veröffentlichungstag der Anmeldung:
**20.01.88 Patentblatt 88/03**

(45) Bekanntmachung des Hinweises auf die
Patenterteilung:
**25.03.92 Patentblatt 92/13**

(84) Benannte Vertragsstaaten:
**AT BE CH DE ES FR GB IT LI NL SE**

(56) Entgegenhaltungen:
**EP-A- 0 006 185       EP-A- 0 062 909**
**DE-A- 2 207 712       DE-A- 2 725 832**
**US-A- 4 022 558       US-A- 4 272 231**
**US-A- 4 606 879**

(73) Patentinhaber: **Reifenhäuser GmbH & Co., Maschinenfabrik
Spicher Strasse
W-5210 Troisdorf 15(DE)**

(72) Erfinder: **Halter, Hartmut
Rubenstrasse 129
W-5210 Troisdorf-Eschmar(DE)**

(74) Vertreter: **Andrejewski, Walter et al
Patentanwälte Andrejewski, Honke & Partner
Postfach 10 02 54 Theaterplatz 3
W-4300 Essen 1(DE)**

EP 0 253 216 B1

## Beschreibung

Die Erfindung betrifft eine Vorrichtung für die Herstellung von Kunststoffolien durch Aufblasen eines extrudierten, thermoplastischen Kunststoffschlauches, - mit einem Ringspaltdüsenkopf mit zumindest einem Austrittsringspalt für den Kunststoffschlauch, einer Blaslufteinrichtung und einer Kühleinrichtung mit zwei oder mehr als zwei den Austrittsringspalt umgebenden Kühlluftaustrittsspalten, wobei ein Kühlluftverteilaggregat für jeden Kühlluftaustrittsspalt eine Kühlluftzuführungseinrichtung aufweist, und die voneinander unabhängigen Kühlluftzuführungseinrichtungen an ein gemeinsames Kühlluftgebläse angeschlossen sind, und wobei jede Kühlluftzuführungseinrichtung eine Luftstromsteuereinrichtung aufweist.

Bei einer bekannten Vorrichtung (DE-A-22 07 712) rotiert der Ringspaltdüsenkopf nicht. Er ist ebenso wie die umgebende Kühleinrichtung stationär angeordnet. Die Kühleinrichtung weist ein gemeinsames Kühlgebläse auf, welches Kühlluftzuführungseinrichtungen versorgt, denen jeweils Luftstromsteuereinrichtungen zugeordnet sind. Die Kühlluftzuführungseinrichtungen münden in Verteilerkammern, denen jeweils Kühlluftaustrittsspalte zugeordnet sind. Diese Verteilerkammern sind durch Radialwände in eine Vielzahl von Abteilungen gegliedert. Da jeder dieser Abteilungen eine Kühlluftzuführungseinrichtung zugeordnet ist, muß der Kühlluftstrom für jede dieser Abteilungen mit der zugeordneten Luftstromsteupreinrichtung eingestellt werden. Das ist aufwendig und wagen der Vielzahl der einzustellenden Luftstromsteuereinrichtungen auch unsicher.

Der Erfindung liegt die Aufgabe zugrunde, eine gattungsgemäße Vorrichtung so weiter auszubilden, daß die aus den einzelnen ringförmigen Kühlluftaustrittsspalten austretenden Kühlluftströme unabhängig voneinander steuerbar sind, so daß eine sehr gleichmäßige, über den Umfang gleichsam homogene Kühlung der Schlauchfolie eingerichtet werden kann, und zwar insbesondere bei rotierendem Ringspaltdüsenkopf.

Diese Aufgabe wird dadurch gelöst, daß der Ringspaltdüsenkopf rotiert und die Kühleinrichtung ein stationäres Kühlluftzuleitungsunterteil sowie ein rotierendes Kühlluftzuleitungsoberteil aufweist, und daß die an das Kühlluftzuleitungsoberteil angeschlossenen Kühlluftzuführungseinrichtungen in Strömungsrichtung hinter der Luftstromsteuereinrichtung eine umlaufende, ringförmige Verteilerkammer und daran angeschlossene, unmittelbar oder mittelbar über eine weitere Verteilerkammer zu den Kühlluftaustrittsspalten führende Spalträume aufweisen. Damit ist eine wesentlich bessere Verteilung des Kühlluftstromes über den Umfang des extrudierten Kunststoffschlauches möglich, weil einerseits mit durchgehend umlaufenden, ringförmigen Verteilerkammern gearbeitet wird und andererseits diese Verteilerkammern über Spalträume an die Kühlluftaustrittsspalte angeschlossen sind. Es versteht sich, daß mit einem ausreichend leistungsstarken Gebläse gearbeitet wird und daß die geförderte Kühlluft in ausreichender Menge mit ausreichendem statischen Druck im Kühlluftzuleitungsoberteil und damit vor den einzelnen Kühlluftzuführungseinrichtungen anstehen muß. Insoweit erfolgt die Auslegung nach den Gesetzen der Aerodynamik.

Die Luftstromsteuereinrichtungen können aus Lochblenden und/oder Klappenventilen bestehen, die über Fernwirkung verstellbar sind.

In der Ausführungsform, bei der die Kühlluftzuführungseinrichtungen über Schlauch- oder Rohrleitungen, die über den Umfang verteilt sind, an das Kühlluftzuleitungsoberteil angeschlossen sind, empfiehlt die Erfindung, daß jeder in die Kühlluftzuführungseinrichtungen einmündenden Schlauch- oder Rohrleitung eine Luftstromsteuereinrichtung zugeordnet ist. Im Rahmen der Erfindung liegt es, in den Verteilerkammern Strömungsleiteinbauten anzuordnen.

Die erreichten Vorteile sind darin zu sehen, daß bei der erfindungsgemäßen Vorrichtung die aus den einzelnen ringförmigen Kühlluftaustrittsspalten austretenden Kühlluftströme unabhängig voneinander steuerbar sind, so daß eine sehr gleichmäßige, über den Umfang gleichsam homogene Kühlung der Schlauchfolie eingerichtet werden kann.

Im folgenden wird die Erfindung anhand einer lediglich ein Ausführungsbeispiel darstellenden Zeichnung ausführlicher erläutert.

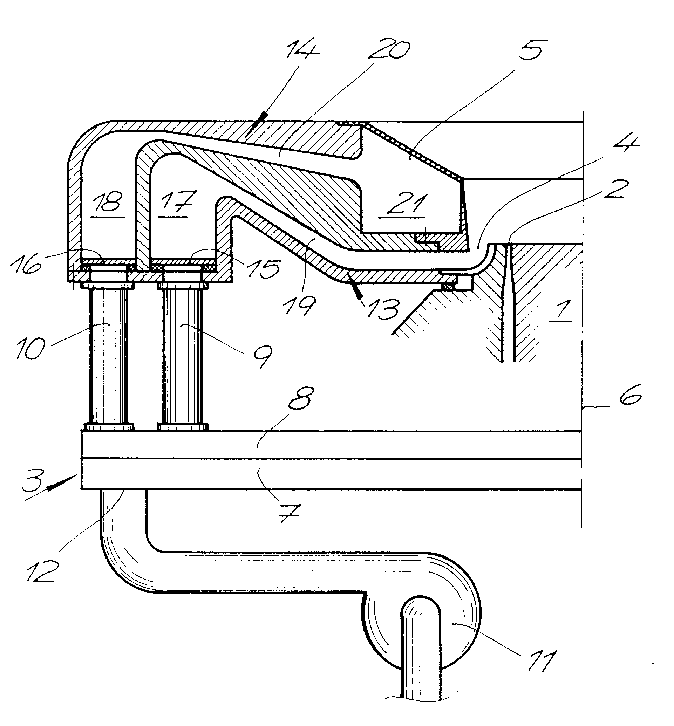

Die einzige Figur zeigt in schematischer Darstellung sowie im Vertikalschnitt die linke Hälfte einer erfindungsgemäßen Vorrichtung.

Die in der Figur dargestellte Vorrichtung ist für die Herstellung von Kunststoffolien durch Aufblasen eines extrudierten und thermoplastifizierten Kunststoffschlauches bestimmt. Zum grundsätzlichen Aufbau gehören

ein rotierender Ringspaltdüsenkopf 1 mit Austrittsringspalt 2 für den Kunststoffschlauch,

eine nichtgezeichnete Blaslufteinrichtung und

eine Kühleinrichtung 3 mit im Ausführungsbeispiel zwei den Austrittsringspalt 2 umgebenden ringförmigen Kühlluftaustrittsspalten 4, 5.

Der Ringspaltdüsenkopf 1 rotiert um die rechts in der Figur angedeutete Achse 6 und ist in bezug auf die rotierenden Teile insoweit rotationssymmetrisch. Die Kühleinrichtung 3 rotiert im Ausführungsbeispiel ebenfalls. Die Kühleinrichtung 3 besitzt dazu ein Kühlluftzuleitungsbauteil mit einem stationären Kühlluftzuleitungsunterteil 7 und einem rotierenden Kühlluftzuleitungsoberteil 8. Mit dem Kühlluftzuleitungsoberteil 8 ist über Schläuche 9, 10 ein Kühlluftverteilaggregat verbunden, welches andererseits zu den Kühlluftaustrittsspalten 4, 5 führt. Die Kühlluftzuleitungsbauteile 7, 8 sind an ein gemeinsames Kühlluftgebläse 11 angeschlossen, welches in der Figur rechts angedeutet wurde. Die von dem Kühlluftgebläse 11 geförderte Kühlluft tritt bei 12 in das Kühlluftzuleitungsunterteil 7 ein.

Das Kühlluftverteilaggregat weist für jeden Kühlluftaustrittsspalt 4, 5 eine Kühlluftzuführungseinrichtung 13, 14 auf. Die Kühlluftzuführungseinrichtungen 13, 14 sind aerodynamisch voneinander unabhängig. Die voneinander unabhängigen Kühlluftzuführungseinrichtungen 13, 14 sind jedoch an das gemeinsame Kühlluftzuleitungsoberteil 8 angeschlossen. Die Anordnung ist so getroffen, daß jede Kühlluftzuführungseinrichtung 13, 14 im Übergangsbereich zu dem Kühlluftzuleitungsoberteil 8 eine Luftstromsteuereinrichtung 15, 16 aufweist. Die einzelnen Kühlluftzuführungseinrichtungen 13, 14 besitzen in Strömungsrichtung hinter den Luftstromsteuereinrichtungen 15, 16 eine umlaufende ringförmige Verteilerkammer 17, 18 und, daran angeschlossen, zu den Kühlluftaustrittsspalten 4, 5 führende Spalträume 19, 20. Der untere 19 der Spalträme 19, 20 führt unmittelbar zu seinem Kühlluftaustrittsspalt 4, der obere 20 über eine weitere Verteilerkammer 21. Die Luftstromsteuereinrichtungen 15, 16 mögen als Lochblenden und/oder Klappenventile ausgeführt sein. Sie sind regelmäßig über Fernwirkung verstellbar.

Das Ausführungsbeispiel zeigt die Ausführungsform, bei der die Kühlluftzuführungseinrichtungen 13, 14 über Schlauchleitungen 9, 10, die über den Umfang verteilt sind, an das Kühlluftzuleitungsoberteil 8 angeschlossen sind. Es versteht sich, daß man im allgemeinen den Ring der inneren Schläuche 9 gegenüber dem Ring der äußeren Schläuche 10 versetzt anordnen wird. Im übrigen ist die Anordnung hier so getroffen, daß jeder in die Kühlluftzuführungseinrichtungen 13, 14 einmündenden Schlauchleitung 9, 10 eine Luftstromsteuereinrichtung zugeordnet ist. In den Verteilerkammern 17, 18 können Strömungsleiteinbauten angeordnet sein.

**Patentansprüche**

1. Vorrichtung für die Herstellung von Kunststoffolien durch Aufblasen eines extrudierten, thermoplastischen Kunststoffschlauches, - mit
einem Ringspaltdüsenkopf (1) mit zumindest einem Austrittsringspalt (2) für den Kunststoffschlauch,
einer Blaslufteinrichtung und
einer Kühleinrichtung (3) mit zwei oder mehr als zwei den Austrittsringspalt (2) umgebenden ringförmigen Kühlluftaustrittsspalten (4,5),
wobei ein Kühlluftverteilaggregat für jeden Kühlluftaustrittsspalt (4,5) eine Kühlluftzuführungseinrichtung (13,14) aufweist, und die voneinander unabhängigen Kühlluftzuführungseinrichtungen (13,14) an ein gemeinsames Kühlluftgebläse (11) angeschlossen sind, und wobei jede Kühlluftzuführungseinrichtung (13,14) eine Luftstromsteuereinrichtung (15,16) aufweist, **dadurch gekennzeichnet,** daß der Ringspaltdüsenkopf (1) rotiert und die Kühleinrichtung (3) ein stationäres Kühlluftzuleitungsunterteil (7) sowie ein rotierendes Kühlluftzuleitungsoberteil (8) aufweist und daß die an das Kühlluftzuleitungsoberteil (8) angeschlossenen Kühlluftzuführungseinrichtungen (13,14) in Strömungsrichtung hinter der Luftstromsteuereinrichtung (15,16) eine umlaufende, ringförmige Verteilerkammer (17,18) und daran angeschlossene, unmittelbar oder mittelbar über eine weitere Verteilerkammer (21) zu den Kühlluftaustrittsspalten (4,5) führende Spalträume (19,20) aufweist.

2. Vorrichtung nach Anspruch 1, dadurch gekennzeichnet, daß die Luftstromsteuereinrichtungen (15,16) aus Lochblenden und/oder Klappenventilen bestehen, die über Fernwirkung verstellbar sind.

3. Vorrichtung nach einem der Ansprüche 1 oder 2 in der Ausführungsform, bei der die Kühlluftzuführungseinrichtungen über Schlauch- oder Rohrleitungen, die über den Umfang verteilt sind, an das Kühlluftzuleitungsbauteil angeschlossen sind, dadurch gekennzeichnet, daß jeder in die Kühlluftzuführungseinrichtungen (13,14) einmündenden Schlauch- oder Rohrleitung (9,10) eine Luftstromsteuereinrichtung (15,16) zugeordnet ist,

4. Vorrichtung nach einem der Ansprüche 1 bis 3, dadurch gekennzeichnet, daß in den Verteilerkammern (17,18) Strömungsleiteinbauten angeordnet sind.

**Claims**

1. An equipment for the manufacture of plastics films by inflating an extruded, thermoplastic plastics tube - with
an annular gap nozzle tip (1) with at least one outflow annular gap (2) for the plastics tube,
an air-blast appliance and
a cooling appliance (3) with two or more than two cooling air outflow gaps (4, 5) surrounding the outflow annular gap (2),
in which a cooling air distribution assembly for each cooling air outflow gap (4, 5) possesses a cooling air feed appliance (13, 14), and the cooling air feed appliances (13, 14) which are independent of each other are connected to a common cooling air blower (11), and in which each cooling air feed appliance (13, 14) possesses an air flow control appliance (15, 16), *characterized in that* the annular gap nozzle tip (1) rotates and the cooling appliance (3) possesses a stationary cooling air supply lower portion (7) and a rotating cooling air supply upper portion (8), and that in the direction of flow beyond the air flow control appliance (15, 16) the cooling air feed appliances (13, 14) connected to the cooling air supply upper portion (8) possess a circular annular-shaped distributor chamber (17, 18) and attached thereto gap spaces (19, 20) leading directly, or indirectly via a further distributor chamber (21), to the cooling air outflow gaps (4, 5).

2. An equipment according to Claim 1, *characterized in that* the air flow control appliances (15, 16) consist of diaphragm valves and/or flap valves that are controllable by remote control.

3. An equipment according to one of Claims 1 or 2 in the form of construction in which the cooling air feed appliances are attached to the cooling air supply component by tubes or pipes that are distributed around the periphery, *characterized in that* an air flow control appliance (15, 16) is associated with each tube or pipe (9, 10) opening out into the cooling air feed appliances (15, 16).

4. An equipment according to one of Claims 1 to 3, *characterized in that* flow-directing components are located in the distributor chambers (17, 18).

**Revendications**

1. Dispositif destiné à la fabrication de feuilles en matière plastique par soufflage d'un tuyau flexible en matière thermoplastique extrudé - avec
tête de buse à passage annulaire (1) avec au moins un passage annulaire de sortie (2) pour le tuyau flexible en matière plastique,
un dispositif à air de soufflage et
un dispositif de refroidissement (3) avec deux fentes de sortie d'air de refroidissement annulaires (4,5) ou plus entourant la fente annulaire de sortie (2),
une unité de distribution d'air de refroidissement pour chaque fente de sortie d'air de refroidissement (4,5) présentant un dispositif d'amenée d'air de refroidissement (13,14) et les dispositifs d'amenée d'air de refroidissement (13,14) indépendants l'un de l'autre étant raccordés à une soufflerie à air de refroidissement commune (11) et chaque dispositif d'amenée d'air de refroidissement (13,14) présentant un dispositif de contrôle de flux d'air (15,16), **caractérisé** par le fait que la tête de buse à passage annulaire (1) tourne et que le dispositif de refroidissement (3) présente une partie inférieure d'amenée d'air de refroidissement stationnaire (7) ainsi qu'une partie supérieure d'amenée d'air de refroidissement rotative (8) et que les dispositifs d'amenée d'air de refroidissement (13,14) raccordés à la partie supérieure d'amenée d'air de refroidissement (8) présentent, dans le sens d'écoulement derrière le dispositif de contrôle du flux d'air (15,16), une chambre de distribution annulaire sur le pourtour (17,18) et, raccordés indirectement ou directement à cette dernière via une autre chambre de distribution (21), des espaces fendus (19,20) menant aux fentes de sortie d'air de refroidissement (4,5).

2. Dispositif selon la revendication 1, caractérisé par le fait que les dispositifs de contrôle du flux d'air (15,16) se composent de panneaux perforés et/ou de clapets réglables par télécommande.

3. Dispositif selon l'une des revendications 1 ou 2, modèle dans lequel les dispositifs d'amenée d'air de refroidissement sont raccordés au composant d'amenée d'air de refroidissement par des conduites souples ou rigides réparties sur toute la longueur, caractérisé par le fait qu'un dispositif de contrôle du flux d'air (15,16) est subordonné à chacune des conduites flexibles ou rigides (9,10) débouchant dans les dispositifs d'amenée d'air de refroidissement (13,14).

4. Dispositif selon l'une des revendications de 1 à 3, caractérisé par le fait que des chicanes de guidage d'écoulement sont disposées dans les chambres de distribution (17,18).